# EUROPÄISCHE PATENTSCHRIFT

(11) **EP 4 466 982 B1**
(45) Veröffentlichungstag und Bekanntmachung des Hinweises auf die Patenterteilung: **29.01.2025**
(21) Anmeldenummer: 23175309.6
(22) Anmeldetag: 25.05.2023
(51) Int. Cl.: A01G 9/033

(54) **DACHBEGRÜNUNGSMODUL**
ROOF GREENING MODULE
MODULE DE VERDURE DE TOIT

(43) Veröffentlichungstag der Anmeldung: 27.11.2024
(73) Patentinhaber: Comma GmbH, 21423 Winsen Luhe (DE)
(72) Erfinder: BARGFELD, Oliver, 21335 Lüneburg (DE)
(74) Vertreter: Raffay & Fleck

(56) Entgegenhaltungen:
- WO-A2-2019/135031
- FR-A1- 2 924 572
- KR-B1- 101 225 187
- KR-B1- 101 247 568
- KR-B1- 102 048 147
- US-A1- 2004 177 578

## Beschreibung

Die vorliegende Erfindung betrifft ein Dachbegrünungsmodul mit den Merkmalen des Oberbegriffs des Anspruchs 1 .

Es ist bekannt, insbesondere im städtischen Bebauungsbereich, aber auch im Umfeld ländlicher und eher aufgelockerter Bebauung, Gebäudedächer mit einer sogenannten Dachbegrünung zu versehen. Hierbei werden auf Dachflächen, insbesondere, aber nicht nur, auf Flachdächern, in darauf aufgebrachtes Pflanzsubstrat Grün- und/oder Blütenpflanzen angepflanzt. Derartige Dachbegrünungen bieten vielfältige Vorteile. So können sie Niederschlagsmengen, die ansonsten von einer unbegrünten Dachfläche sehr schnell ablaufen und entweder in der Kanalisation abgeführt werden oder aber bei Starkregen zu Überflutungen führen können, binden und zurückhalten und in trockenen und warmen Phasen über Verdunstung wieder an die Umgebung abgeben. Sie führen zu einer zusätzlichen Isolierung und verbesserten Klimatisierung der mit solcher Dachbegrünung versehenen Gebäude. Sie können durch ein dort aufgebrachtes Angebot an Blüh- und anderen Pflanzen für Insekten und andere Tiere Zuflucht und Nahrung bieten und so beim Erhalt und der Förderung der Artenvielfalt unterstützen. Neben diesen genannten Vorteilen sind noch weitere Vorteile von Dachbegrünung bekannt und werden zum Beispiel auf der unter https://www.dachbegruenung-ratge-ber.de/vorteile-dachbegruenung abrufbaren Internetseite beschrieben.

Aktuell werden Dachbegrünungen in der Regel fest auf Dachflächen aufgebracht bzw. installiert. Hierbei wird auf die Dachflächen, häufig unter Zwischenlage einer Sperrfolie und Ausbildung eines Halterahmen, Pflanzenerde oder ein anderes Substrat aufgeschüttet, und es werden Blüh- oder Grünpflanzen dort eingepflanzt oder ausgesät. Der Nachteil eines solchen Vorgehens besteht darin, dass dann, wenn zum Beispiel Wartungs- oder Reparaturarbeiten an dem so begrünten Dach durchzuführen sind, die Dachbegrünung entfernt und die entsprechende Struktur dabei zerstört werden muss. Anschließend muss eine Dachbegrünung dann gänzlich neu aufgebaut werden.

Auch für die Begründung von Dachflächen insbesondere von mit kurzer Standzeit errichteten Gebäuden, insbesondere in Containerbauweise errichteten Bauten, wie zum Beispiel temporär errichteten Unterkünften, wie Flüchtlingsunterkünften oder Unterbringungen von auf Baustellen Beschäftigten oder zeitweise errichteten Schul- Klassenräumen, ist eine solche auf das Dach direkt fest aufgebrachte Dachbegrünung ungünstig. Denn sie muss beim Rückbau der temporären Gebäude entfernt werden, kann nicht wiederverwendet werden. Hierbei geht nicht nur die Dachbegrünung verloren, sondern es fällt zudem Abfall an, wie zum Beispiel eine auf die Dachfläche des temporär errichteten Gebäudes aufgelegte Folie oder dergleichen.

Es gibt aber auch bereits Überlegungen, Dachbegrünungen in eigens dafür vorgesehenen, auf den zu begründenden Dächern anzuordnenden Formteilen oder Modulen vorzusehen. Ein Beispiel für ein Formteil für eine Dachbegrünung ist in der DE 100 40 291 A1 beschrieben. Gezeigt ist dort eine rinnenartig ausgebildete Blechstruktur, in der ein Substrat eingefüllt ist. Das Substrat ist mit einem auf die Oberkanten der Rinne aufgelegten Gitter oder Netz abgedeckt; Pflanzen wurzeln in dem Substrat und wachsen durch die Gitteröffnungen. Diese rinnenartige Struktur ist als an ein Dachprofil angepasst beschrieben.

Eine weitere Überlegung, eine modulare Dachbegrünung zu schaffen, stammt von der hiesigen Anmelderin und ist in der DE 20 2020 004 146 U1 offenbart. Dort ist ein Element beschrieben, welches eine eigene statische Einheit bildet und so auf fast jede vorhandene Container- bzw. Modulanlage, auch im Nachhinein, montiert werden kann. In dem Element wird Regenwasser durch eine Hydrokultur und eine Kiesschicht in eine Wasserauffangwanne geführt, die als Überlauf bei Starkregen dient.

In der FR 2 924 572 A1 ist eine Vorrichtung zum Filtern, Rückgewinnen und Speichern von Regenwasser auf dem Dach von Bauwerken, die mit drei vertikal gestaffelten Abschnitten gebildet ist. In einem unteren Abschnitt ist ein Wassertank gebildet. Ein Zwischenabschnitt dient dem Sammeln und Auffangen einer begrenzten Mengen von Wasser. In einem obersten Abschnitt ist Pflanzgut auf einem horizontal verlaufenden Gitter angeordnet. Zwischen dem unteren und dem mittleren Abschnitt ist eine in einem mittleren Abschnitt horizontal, in Seitenabschnitten geneigt verlaufende Trennwand angeordnet, die mit Öffnungen durchsetzt ist.

Vor dem Hintergrund dieses Standes der Technik ist es Aufgabe der vorliegenden Erfindung, ein Dachbegrünungsmodul in verbesserter Bauform anzugeben, welches ein verbessertes Wassermanagement bietet und in einfacher Weise auf vorhandenen Dachflächen angeordnet und installiert und ebenso gut wieder von dort entnommen und in einem neuen Aufbau wiederverwertet werden kann.

Diese Aufgabe wird erfindungsgemäß gelöst durch ein Dachbegrünungsmodul mit den Merkmalen des Anspruchs 1. Vorteilhafte Weiterbildungen eines solchen erfindungsgemäßen Dachbegrünungsmoduls sind in den Ansprüchen 2 bis 15 angegeben.

Erfindungsgemäß umfasst das Dachbegrünungsmodul zunächst eine Wanne, die in einem tragenden Rahmen gebildet und durch Seitenwände und einen Boden begrenzt ist. Die Wanne ist dabei nach oben offen. Weiterhin ist die Wanne durch eine Trennwand in zwei im Wesentlichen vertikal getrennte Abschnitte unterteilt, einen bodennahen, unteren Abschnitt und einen oberen Abschnitt. Der bodennahe, untere Abschnitt bildet einen Wasserauffangtank aus. Dieser Wasserauffangtank ist also mit anderen Worten im Wesentlichen über die gesamte Bodenfläche der Wanne gebildet und erstreckt sich über eine vorgegebene Höhe, die niedriger ist als die Gesamthöhe der Wanne. Der obere Abschnitt der Wanne dient der Aufnahme von Pflanzgut und ist mit Pflanzgut befüllt. Unter Pflanzgut ist hierbei ein geeignetes Substrat zu verstehen, in dem dann Blüh- oder Grünpflanzen wurzeln und wachsen können. Auch diese Pflanzen können dabei als ein Bestandteil des Pflanzguts verstanden werden.

Die Trennwand, die die Wanne in den unteren Abschnitt und den oberen Abschnitt unterteilt und auf der das Pflanzgut aufgebracht ist, ist erfindungsgemäß selbst wiederum mit drei Wandabschnitten gebildet. Dies sind zunächst einmal zwei Seitenabschnitte, von denen in einem Querschnitt der Wanne gesehen jeweils einer an einer von zwei einander gegenüberliegenden Seitenwänden angrenzt und die undurchbrochen gebildet sind, in denen die Trennwand also ohne einen Durchlass geschlossen ist. Weiterhin ist ein Mittelabschnitt gebildet, der eine Vielzahl von Durchtrittsöffnungen aufweist. Dieser Mittelabschnitt liegt mittig zwischen den Seitenabschnitten, wobei sich die Seitenabschnitte insbesondere unmittelbar an den Mittelabschnitt anschließen. Die Seitenabschnitte verlaufen erfindungsgemäß ausgehend von den beiden einander gegenüberliegenden Seitenwänden und hin zu dem Mittelabschnitt in Richtung des Bodens geneigt hin zu dem Mittelabschnitt. Dabei können die Seitenabschnitte bevorzugt eben ausgebildet sein.

Diese Ausgestaltung des Dachbegrünungsmoduls birgt nun verschiedene Vorteile: Das Modul ist dadurch, dass es als Wanne mit einem tragenden Rahmen ausgebildet ist, in sich stabil und kann als Ganzes verladen, transportiert und insbesondere auf eine Dachstruktur gehoben und dort angeordnet werden. Es kann ebenso gut wieder von einem Dach, auf dem es angeordnet ist, abgehoben werden, zum Beispiel um an die unter dem Dachbegrünungsmodul gelegene Dachstruktur zu gelangen und dort Wartungs- oder Reparaturarbeiten vorzunehmen. Anschließend kann das Dachbegrünungsmodul wiederum an seinen Aufstellungsort auf dem Dach zurückgesetzt werden. Ebenso kann ein erfindungsgemäßes Dachbegrünungsmodul zum Beispiel auf einem temporär errichteten Bauwerk, zum Beispiel einem Container-Wohn- oder Arbeitsmodul, angeordnet werden und kann dann, wenn das Containermodul abgebaut oder zu einem neuen Einsatzort verbracht wird, abgenommen und für die Begrünung eines anderen Daches oder für die Begrünung des Daches des Containermoduls an einem neuen Aufstellungsort wiederverwertet werden.

Durch den in dem unteren Abschnitt der Wanne ausgebildeten Wasserauffangtank kann überschüssiges, von in dem oberen Abschnitt angeordneten Pflanzgut nicht aufgenommenes oder gehaltenes Regenwasser aufgefangen und gesammelt werden. Dieses Wasser rinnt dann auf der Oberseite der Seitenabschnitte der Trennwand in Richtung des Mittelabschnitt und tritt dort durch die Durchtrittsöffnung hindurch und gelangt so in den unteren Abschnitt und den dort ausgebildeten Wasserauffangtank.

Wird bei Sonneneinstrahlung bzw. bei warmen Außentemperaturen in dem Wasserauffangtank befindliches Wasser erwärmt und verdunstet, so kondensiert dies an den undurchbrochen gebildeten Seitenabschnitten der Trennwand, die aufgrund des in dem oberen Abschnitt darauf aufliegenden Pflanzguts vergleichsweise kühler ist, und rinnt tropfenweise in Richtung des Mittelabschnitt und tropft von dort oder tropft auch direkt von den Seitenabschnitten zurück in den Wasserauffangtank. Hierbei führt das Verdunsten des Wassers in dem Wasser auffangtank zu einem Kühleffekt. Die bei der Kondensation entstehende Wärme wird von den Seitenabschnitten auf das Pflanzgut übertragen und dort aufgenommen. So wird durch die besondere Konzeption und Konstruktion des Dachbegrünungsmoduls aufgrund des erhaltenen Wasserkreislaufs ein zusätzlicher Kühleffekt bei außen anliegender Wärme erhalten. Versuche haben hier gezeigt, dass auf diese Weise eine Temperaturdifferenz der unmittelbaren Umgebung eines erfindungsgemäßen Dachbegrünungsmodul zu der weiteren Umgebung von bis zu 3 °C erreicht werden kann; der Effekt einer kühlenden und isolierenden Wirkung für das darunterliegende Gebäude ist noch deutlich größer.

Das in dem Wasserauffangtank befindliche Wasser steht des Weiteren in Perioden geringer Niederschlagsmengen den in dem oberen Abschnitt der Wanne in dem Pflanzgut befindlichen Pflanzen zur Verfügung. Diese wachsen mit ihren Wurzeln entlang der geneigt verlaufenden, undurchbrochenen Seitenabschnitte der Trennwand hin zu dem Mittelabschnitt und können dort durch die Durchtrittsöffnung hindurch wachsen und bis in den Wasserauffangtank hineinragen. Hier können sich die Pflanzen dann nach Art einer Hydrokultur mit dem für sie lebensnotwendigen Wasser versorgen. Auch hier ist der Umstand, dass die Seitenabschnitte der Trennwand undurchbrochen gebildet sind, von Vorteil. Denn so wird verhindert, dass die Pflanzenwurzeln einer zu großen Menge an Wasser ausgesetzt sind, was die Gefahr von Fäulnis mit sich bringen würde und damit von Erkrankungen der Pflanzen.

Insbesondere benötigen erfindungsgemäße Dachbegrünungsmodule keine Einrichtung für ein Umwälzen oder Fördern des in dem Wasserauffangtank gesammelten Wassers für eine Bewässerung des Pflanzguts.

Der Mittelabschnitt kann gemäß einer vorteilhaften Weiterbildung der Erfindung als Lochblech ausgeführt sein. Er kann zudem in einer möglichen Ausgestaltungsvariante, sei dies als Lochblech oder auch in einer anderen Form mit Durchtrittsöffnungen versehen, parallel zu dem Boden verlaufen, also anders als die Seitenabschnitte ohne eine Neigung relativ zu dem Boden.

Die Seitenabschnitte und der Mittelabschnitt der Trennwand können insbesondere aus einem Metallblech, insbesondere einem verzinkten Stahlblech, gebildet sein. Dabei können diese Abschnitte in einem Stück hergestellt und entsprechend durch Umformen und Bearbeiten in die Abschnitte gebracht und im Mittelabschnitt perforiert sein. Es können die Abschnitte aber auch einzeln hergestellt und dann gesondert zu der Trennwand zusammengefügt sein, sei dies lösbar oder auch fest, zum Beispiel durch Verschweißen.

Um die Haltbarkeit des erfindungsgemäßen Dachbegrünungsmoduls, insbesondere auch in dem durch das darin aufgefangene Wasser besonders korrosionsanfälligen Wasserauffangtank, zu verbessern, kann der Boden und können die den Wasserauffangtank im unteren Abschnitt begrenzenden Seitenwände bzw. Seitenwandabschnitte aus einem mit einem Korrosionsschutz belegt Metallblech gebildet sein, wobei dies insbesondere mit einem Bitumenanstrich versehene Stahlbleche sein können.

Auch wenn grundsätzlich andere Materialien für den Bau des erfindungsgemäßen Dachbegrünungsmoduls infrage kommen, ist eine Konstruktion aus Metall besonders zu bevorzugen. Diese kann zum einen besonders stabil und insbesondere auch selbsttragend gebildet werden, zum anderen ist sie - insbesondere wenn mit einem wie vorstehend vorgeschlagen Korrosionsschutz durch zum Beispiel Verzinken oder einen Bitumenanstrich, versehen - besonders dauerhaft und haltbar, sodass ein erfindungsgemäßes Dachbegrünungsmodul lange Standzeiten und hohe Wiederverwendungsraten aufzeigen kann.

Die Seitenabschnitte des erfindungsgemäßen Dachbegrünungsmoduls können gegenüber dem Boden insbesondere unter einem Neigungswinkel von 0,5° bis 10° verlaufen, insbesondere unter einem Neigungswinkel von 0,5° bis 5°, vorzugsweise unter einem Neigungswinkel von 0,7° bis 1,5°, zum Beispiel unter einem Neigungswinkel von etwa 1 °. Ein solch geringer Neigungswinkel genügt einerseits, um die vorstehend beschriebenen Effekte der Ableitung von überschüssigem Regenwasser in dem oberen Abschnitt hin zu dem Mittelabschnitt der Trennwand einerseits und der Ableitung von aus dem Wasserauffangtank verdunstetem und an der dem unteren Abschnitt zugewandten Unterseite der Trennwand kondensiertem Wasser zurück in den Wasserauffangtank andererseits zu erzielen. Weiterhin ist auf diese Weise ein Höhenunterschied im oberen Abschnitt zwischen den an die Seitenwände angrenzenden Enden der Seitenabschnitte und den an den Mittelabschnitt angrenzenden Enden der Seitenabschnitte nicht so hoch, dass sich eine über die Maßen unterschiedliche Dicke der in dem oberen Abschnitt aufgelegten, das Pflanzgut ausbildenden Schicht ergibt, sodass sowohl in diesbezüglich äußeren Bereichen als auch in inneren Bereichen die dort eingebrachten Pflanzen ausreichend Substrat vorfinden und sich gut entwickeln können, wobei hinsichtlich eines Gewichtsmanagements auch dafür gesorgt ist, dass die Schicht des Pflanzguts nicht über die Maßen dick zu wählen ist.

In einer derzeit bevorzugten Ausführungsvariante kann das Verhältnis der Abmessungen der Breite des Bodens zu der Breite des Mittelabschnitts, genommen in dem Querschnitt, zwischen 15:1 und 35:1 betragen, vorzugsweise zwischen 20:1 und 30:1, insbesondere etwa 25:1 eine solche Unterteilung, dies konnte festgestellt werden, führt zu besonders guten Ergebnissen hinsichtlich des Wasserhaushalts und der wie vorstehend beschriebenen zusätzlichen Kühlwirkung des Wasserauffangtanks durch Verdunsten und Kondensieren des Wassers an den Unterseiten der Seitenteile der Trennwand und zudem im Hinblick auf die Möglichkeit für die in dem oberen Abschnitt der Wanne angeordneten Pflanzen durch den Mittelabschnitt hindurch mit ihren Wurzeln an den Wasservorrat in dem Wasserauffangtank zu gelangen.

Mit Vorteil kann bei dem erfindungsgemäßen Dachbegrünungsmodul ein von dem Wasserauffangtank nach außerhalb des Dachbegrünungsmoduls führender Überlauf zum Ableiten von Wasser aus dem Wasserauffangtank vorgesehen sein, wenn dieser einen maximalen Füllstand erreicht hat. Ein solcher Überlauf kann zum Beispiel durch einen entsprechenden Durchbruch, bzw. eine Öffnung oder auch mehrere solche Durchbrüche oder Öffnungen in einer oder mehreren der Seitenwände gebildet sein. Durch einen solchen Überlauf kann zum Beispiel bei starken Regenereignissen Wasser, welches weder durch das Pflanzgut zurückgehalten, noch durch den Wasserauffangtank insgesamt aufgefangen werden kann, abgeleitet werden, ohne dass der Wasserstand steigt und stehendes Wasser durch die Durchtrittsöffnungen in dem Mittelabschnitt bis in das Pflanzgut gelangt und dann die Wurzeln der Pflanzen gefährdet, insbesondere durch Fäulnis. Zudem wird auf diese Weise verhindert, dass das Dachbegrünungsmodul durch ein Übermaß an aufgenommenem Wasser ein zu hohes Gewicht erreicht und mithin eine maximale Auflast auf dem begrünten Dach etwa überschritten werden könnte
Eine Ableitung des überschüssigen Wassers durch den Überlauf hat zudem den Vorteil, dass der Überlauf über zum Beispiel eine Regenrinne oder ein unmittelbar angeschlossenes Fallrohr an ein Entwässerungs- oder Abwassersystem angeschlossen und somit einem Abwassermanagement zugeführt werden kann und nicht unkontrolliert auf umgebende Flächen austritt und dort zu Problemen führt, indem es zum Beispiel in das Gebäude eindringt oder unkontrolliert auf der Erdoberfläche steht oder dort unkontrolliert abfließt.

Mit besonderem Vorteil kann das erfindungsgemäße Dachbegrünungsmodul eine rechteckige Grundform aufweisen, wobei dann die Seitenabschnitte der Trennwand ausgehend von den Längskanten in Richtung einer Längsmittelachse des Dachbegrünungsmoduls geneigt verlaufen und der Mittelabschnitt sich entlang der oder parallel zu der Mittellängsachse erstreckt. Eine solche rechteckige Grundform, die dann insbesondere zu quaderförmig räumlich gebildeten Dachbegrünungsmodulen führt, ist besonders geeignet für Dachbegrünungsmodule, die zum Beispiel auf Containerbauten angeordnet werden sollen, aber auch für solche Dachbegrünungsmodule, die auf anderen existierenden Gebäuden auf Flachdächern oder auch auf leicht geneigten Dächern angeordnet werden sollen, zum Beispiel mehrere solche Module nebeneinander. Die erfindungsgemäßen Dachbegrünungsmodule können entsprechend in unterschiedlichen Maßen gefertigt werden, zum Beispiel entsprechend Standardcontainerabmessungen in Hinblick auf Breite und Tiefe solcher Container, sodass sie auf bestehende Containerstrukturen aufgesetzt werden können. Es sind aber auch Anfertigungen in anderen Abmessungen denkbar. Ein mögliches Beispiel für Länge und Breite eines erfindungsgemäßen Dachbegrünungsmodul kann zum Beispiel sein eine Länge von etwa 6060 mm bei einer Breite von etwa 2240 mm. Typischerweise ist die Höhe eines erfindungsgemäßen Dachbegrünungsmoduls weit geringer, kann zum Beispiel ca. 300 mm betragen. Durch den tragenden Rahmen können dann insbesondere mehrere erfindungsgemäße Dachbegrünungsmodul übereinandergestapelt gelagert oder transportiert werden, was Transportkosten senkt und erforderliche Lagerkapazitäten geringhält.

In Eckbereichen eines rechteckig ausgebildeten erfindungsgemäßen Dachbegrünungsmoduls können zum Beispiel Strukturen ausgebildet sein, in denen Twistlock-Verbinder eingreifen können, sodass ein erfindungsgemäßes Dachbegrünungsmodul, wenn es auf ein in Containerbauweise errichtetes Gebäude auf der Dachebene aufgesetzt wird, dort mit entsprechenden Gegenstrukturen über eine Twistlock-Verbindung verankert und verbunden werden kann. Eine solche Verbindung ist jedoch nicht unbedingt erforderlich, zumal ein erfindungsgemäßes Dachbegrünungsmodul bereits durch das Eigengewicht und das Gewicht des darin aufgenommenen Pflanzguts und gegebenenfalls in dem Wasserauffangtank gespeicherten Wassers ausreichend stabil ist. So kann ein erfindungsgemäßes Dachbegrünungsmodul zum Beispiel in etwa 1,2 t wiegen, wenn es in dem oberen Abschnitt Substrat aufweist und bepflanzt ist.

Bei einem in rechteckiger Grundform ausgebildeten Dachbegrünungsmodul gemäß der Erfindung kann insbesondere und mit Vorteil vorgesehen sein, dass die Trennwand zu einer lotrecht zu dem Boden verlaufenden Längsmittelebene symmetrisch gebildet ist. Dort liegt mit anderen Worten der Mittelabschnitt entlang einer Längsmittelachse verlaufend, erstreckt sich in beide Richtungen mit gleichem Abstand, und es schließen sich dann spiegelbildlich angeordnet die Seitenabschnitte mit jeweils im Betrag gleichem Neigungswinkel, jedoch in unterschiedliche Richtung geneigt, und mit gleichen Dimensionen an.

In einer rechteckigen Ausgestaltung kann ein erfindungsgemäßes Dachbegrünungsmodul weiterhin mit Vorteil in Querrichtung zwischen den Seitenwänden, insbesondere lotrecht zu diesen, verlaufende und zueinander beanstandete, insbesondere auf dem Boden angeordnete, Träger aufweisen, auf denen die Trennwand aufliegt, mit denen die Trennwand insbesondere fest verbunden, zum Beispiel verschweißt oder verschraubt, sein kann. Derartige Träger stützen die Trennwand und verleihen der gesamten Konstruktion ein zusätzliches Maß an Stabilität, bzw. erlauben die Verwendung einer Trennwand mit einer Wandstärke, die hinreichend gering sein kann, die insbesondere in ihrer Dicke nicht für eine selbsttragende Konstruktion ausgelegt sein muss. Diese Träger bilden dann insbesondere die Form der Trennwand ab, verlaufen also in seitlichen Abschnitten geneigt, in einem Mittelabschnitt insbesondere parallel zum Boden, geben also eine trogartige Struktur der Trennwand bzw. des oberen Abschnitts vor.

Um hier den durch solche Träger in einzelne Segmente unterteilten Wasserauffangtank wiederum als eine gemeinsame Einheit zu bilden, können in den Trägern, insbesondere in einem jeweiligen mittleren Abschnitt der Träger, torartige Öffnungen belassen sein, die die einzelnen Segmente miteinander verbinden. Diese Öffnungen ragen insbesondere bis zum Boden, um so die Fluidverbindung auf dem niedrigsten Niveau des unteren Abschnitts der Wanne zu bilden.

Das Dachbegrünungsmodul gemäß der Erfindung kann weiterhin Anschlagösen aufweisen, die insbesondere lösbar festgelegt sein können, um ein Hubgeschirr an diesen Ösen anschlagen und somit mit dem Dachbegrünungsmodul verbinden zu können. Solche Anschlagösen können insbesondere bei einem rechteckigen Dachbegrünungsmodul an den jeweiligen Ecken angeordnet sein, wobei hierfür der Rahmen in den Ecken mit Vorteil verstärkt ausgebildet sein kann, zum Beispiel durch entsprechend massive Pfostenelemente oder Kantrohre. Auf diese Weise kann zum Beispiel mit einem Kran oder mit einer anderen Hubmaschine ein erfindungsgemäßes Dachbegrünungsmodul erfasst und angehoben und auf einem mit dem Dachbegrünungsmodul zu versehenden Dach abgesetzt werden. Dies kann insbesondere auch mit bereits in dem oberen Abschnitt eingebrachtem Pflanzgut erfolgen. Sind die Anschlagösen lösbar, so können diese nach dem Verbringen des Dachbegrünungsmoduls auf das Dach entfernt werden, sodass sie nicht weiter optisch stören und insbesondere beispielsweise zum Transport eines weiteren Dachbegrünungsmoduls wiederverwendet werden können. In gleicher Weise können mit derartigen Anschlagösen versehene Dachbegrünungsmodule von einem Dach, auf dem sie aufgestellt sind, wiederum abgehoben werden.

Ein erfindungsgemäßes Dachbegrünungsmodul ist mit in dem oberen Abschnitt eingebrachtem Pflanzgut versehen. Dabei kann es zum Beispiel in dem oberen Abschnitt in einem den Mittelabschnitt der Trennwand überdeckenden Bereich eine Schicht aus einem grobkörnigen, porösen Substrat aufweisen und weiterhin Pflanzerde, die in dem oberen Abschnitt die Schicht aus dem grobkörnigen, porösen Substrat überdeckt und auch die Seitenabschnitte überdeckt, auf denen ein grobkörniges, poröses Substrat nicht aufliegt. Das grobkörnige, poröse Substrat kann zum Beispiel Blähton oder Lavagranulat sein oder vergleichbares Material, wie zum Beispiel das unter der Marke Seramis^{®} von der Westland Deutschland GmbH angebotenen Substrat. Das grobkörnige, poröse Substrat bedeckt dann in der dem erfindungsgemäßen Dachbegrünungsmodul die Durchtrittsöffnungen in dem mittleren Abschnitt und verhindert so insbesondere, dass Pflanzerde von aus dem oberen Abschnitt ablaufendem Wasser durch diese Öffnungen hindurch in den Wasserauffangtank geschwemmt wird. Das Substrat ist für Pflanzenwurzeln dennoch durchdringbar, sodass diese zu den Durchtrittsöffnungen gelangen und durch diese hindurch in den Wasserauffangtank hineinwachsen können.

Das erfindungsgemäße Dachbegrünungsmodul kann zudem mit in die Pflanzenerde eingebrachten Grün- und/oder Blühpflanzen versehen sein. Insbesondere kann das Dachbegrünungsmodul dabei in einer bereits in dem oberen Abschnitt mit dem grobkörnigen, porösen Substrat und der Pflanzerde gefüllten Zustand ausgebracht und so auf ein zu begrünendes Dach aufgesetzt werden. Es kann dabei sogar bereits in dem oberen Abschnitt eingesetzte oder dort ausgesäte Pflanzen enthalten. Ebenso gut kann das Dachbegrünungsmodul aber auch mit zunächst leerem oberem Abschnitt, also unbefüllt, auf ein Dach aufgesetzt und erst auf dem Dach entsprechend in dem oberen Abschnitt aufgefüllt und bepflanzt werden.

Erfindungsgemäße Dachbegrünungsmodule können für ganz unterschiedliche Begrünungsanwendungen von Dächern und vergleichbaren Strukturen eingesetzt werden. Sie können für die Dachbegrünung von in Containerbauweise errichteten Gebäuden, z.B. Unterkünften oder auch Bürocontainern, eingesetzt werden. Sie können auf Flachdächer oder Dächer mit geringer Neigung von in herkömmlicher Bauweise errichteten Gebäuden aufgesetzt werden. Auch ist es möglich, die Dachbegrünungsmodule der Erfindung in geringeren Abmessungen auf kleiner Dachstrukturen aufzusetzen, z.B. auf Bushäuschen, Fahrradgaragen oder ähnliche Kleinbauten.

Die erfindungsgemäßen Dachbegrünungsmodule können zudem mit Einrichtungen zum Gewinnen von erneuerbarer Energie kombiniert oder zusammengestellt werden oder aber auch mit solchen Energiegewinnungseinrichtungen versehen werden, z.B. mit Photovoltaikelementen oder Kleinanlagen für Windenergiegewinnung.

Weitere Merkmale und Vorteile der Erfindung ergeben sich aus der nachstehenden Beschreibung einer möglichen Ausführungsform und im Zusammenhang mit den beigefügten zeichnerischen Darstellungen dieser Ausführungsform. Dabei zeigen:

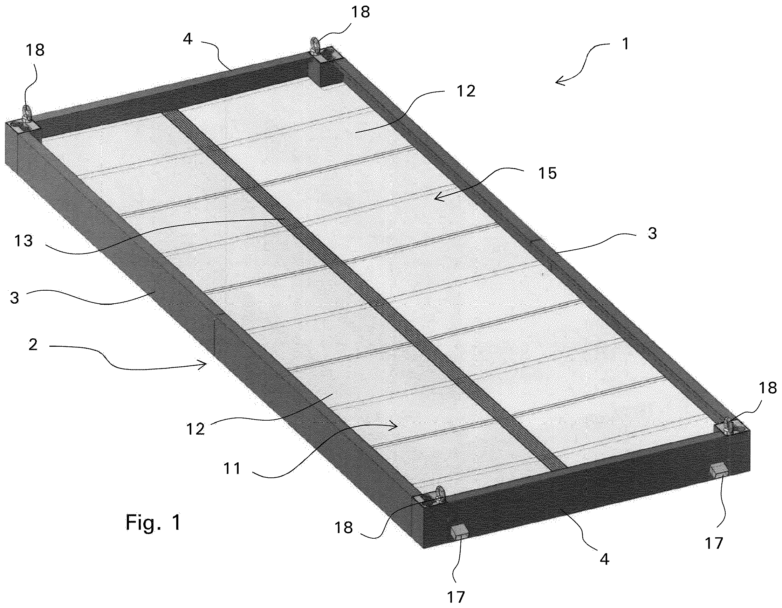

- Fig. 1: in einer schematischen dreidimensionalen Ansicht eine mögliche Ausführungsform eines erfindungsgemäßen Dachbegrünungsmoduls ohne Befüllung mit Substrat und ohne Bepflanzung;

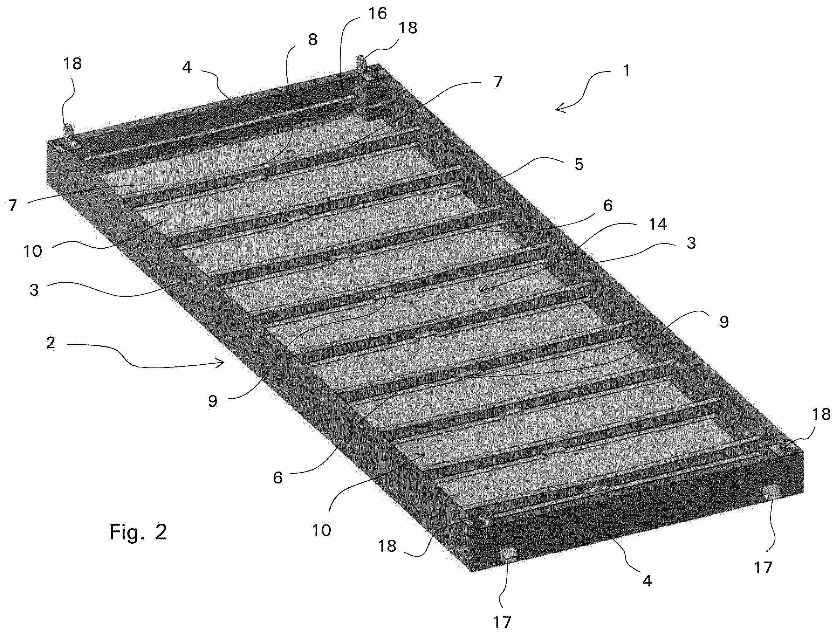

- Fig. 2: in einer der Figur 1 vergleichbaren Ansicht das dort gezeigte Dachbegrünungsmodul ohne Trennwand;

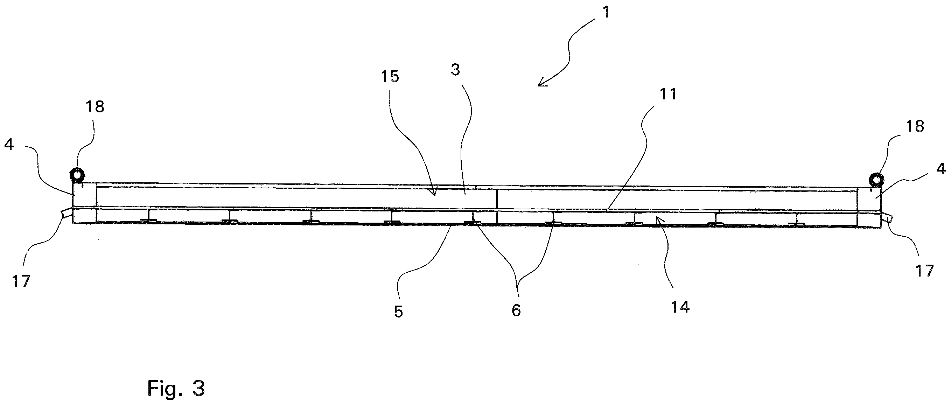

- Fig. 3: schematisch einen Längsschnitt durch das Dachbegrünungsmodul aus Fig. 1; und
- Fig. 4: schematisch einen Querschnitt durch das Dachbegrünungsmodul nach Fig. 1.

In den Figuren ist eine mögliche Ausführungsform eines erfindungsgemäßen Dachbegrünungsmoduls in unterschiedlichen und schematisch wiedergegebenen Ansichten dargestellt, jedoch ohne Pflanzgut. Diese Darstellungen sind, wie bereits gesagt, schematischer Natur und enthalten weder sämtliche konstruktiven Details noch sind sie zwingend maßstabsgerecht zu verstehen. Sie dienen vielmehr einer anschaulichen Verdeutlichung der für die Erfindung maßgeblichen Merkmale und zeigen darüber hinaus weitere vorteilhafte Merkmale dieser Ausgestaltungsvariante, wobei solche vorteilhaften Merkmale, soweit dies für den Fachmann nach seinem technischen Verständnis sinnvoll ist, auch losgelöst von der gezeigten konkreten Ausgestaltungsvariante in abgewandelten Ausführungsformen übernommen werden können, wobei solche abgewandelten Ausführungsformen gerade nicht die weiteren vorteilhaften Merkmale mit umfassen müssen, die in der nachstehend beschriebenen und in den Figuren gezeigten Ausgestaltungsvarianten verwirklicht sind.

In den Figuren ist ein Dachbegrünungsmodul 1 einer möglichen Ausgestaltungsvariante - ohne Pflanzgut - gezeigt, wobei es sich hierbei um ein Dachbegrünungsmodul 1 handelt, welches in einer Art Basisvariante ohne eine mögliche Befüllung mit einem Substrat und ohne eine in dem Substrat eingebrachte Bepflanzung vorliegt. Das Dachbegrünungsmodul 1 weist zunächst einen tragenden Rahmen 2 auf, der in dem gezeigten Ausführungsbeispiel rechteckig gebildet ist mit zwei parallel zueinander angeordneten, längsverlaufenden Seitenelementen 3 sowie zwei senkrecht zu den Seitenelementen 3 orientierten und parallel zueinander angeordneten Stirnelementen 4. In dem Rahmen 2 ist auf einer Unterseite des Dachbegrünungsmoduls 1 ein Boden 5 gebildet. Dieser Boden 5 kann insbesondere durch ein Metallblech gebildet sein, welches mit den in einem solchen Fall vorzugsweise ebenfalls aus Metall bestehenden Seitenelementen 3 und Stirnelementen 4 umlaufend verbunden ist, insbesondere verschweißt sein kann. Als Metall kommt hierbei insbesondere Stahl, vorzugsweise ein rostfreier Stahl, in Betracht. Für einen weitergehenden Korrosionsschutz kann dieses Material zum Beispiel auch verzinkt sein.

In die durch den Rahmen 2 und den Boden 5 gebildete Wanne sind in dem gezeigten Ausführungsbeispiel in insbesondere gleichen Abständen Träger 6 eingesetzt, die insbesondere ebenfalls aus einem Metall gebildet sein können, die auf einer Unterseite mit dem Boden 5 fest verbunden sind, bzw. auf deren Unterseite der Boden 5 festgelegt ist und die an ihren jeweiligen Stirnseiten an den Seitenelementen 3 anstoßen und dort festgelegt sind. Die Träger 6 sind entlang ihrer dem Boden 5 gegenüberliegenden Oberkanten in jeweils nach außen weisenden Abschnitten 7 nach innen zu einer Längsmittellinie des Dachbegrünungsmoduls 1 verlaufend gegenüber dem Boden 5 geneigt, wobei diese Neigung einen Winkel von 0,5° bis 10°, insbesondere 0,5° bis 5°, vorzugsweise 0,7° bis 1,5° ausbilden kann, im gezeigten Ausführungsbeispiel in etwa 1 ° beträgt. In einem mittleren Abschnitt 8 bilden die Träger 6 jeweils an ihrer oberen Kante einen Oberflächenabschnitt aus, der parallel zu dem Boden 5 orientiert ist. Im Bereich des mittleren Abschnitts 8 sind durch jeweilige Ausschnitte in den Trägern 6 torartige Öffnungen 9 gebildet, die bis zum Boden 5 reichen. Durch diese torartigen Öffnungen 9 sind durch die Träger 6 unterteilte Segmente 10 miteinander verbunden.

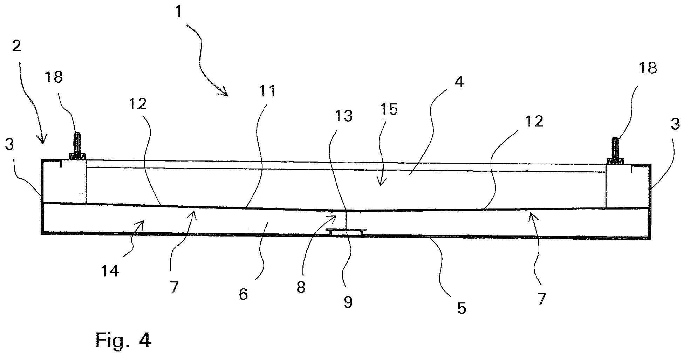

Auf den oberen Kanten der Träger 6 liegt eine Trennwand 11 auf und ist mit den Trägern 6 und im Übrigen auch mit den umgebenden Elementen 3, 4 des Rahmens 2 verbunden. Auch die Trennwand 11 kann insbesondere aus einem metallischen Material gebildet sein, vorzugsweise aus einem Stahlblech, insbesondere einem verzinkten Stahlblech, um vor Korrosion geschützt zu sein. Die Trennwand 11 lässt sich in drei Abschnitte unterteilen, zwei Seitenabschnitte 12, die auf den nach außen weisenden Abschnitten 7 der Träger 6 aufliegen und die entsprechend geneigt zu der Ebene des Bodens 5 orientiert verlaufen, und einen Mittelabschnitt 13, der auf dem mittleren Abschnitt 8 der jeweiligen Träger 6 aufliegt. In den Seitenabschnitten 12 ist die Trennwand 11 geschlossen und ohne Durchbrechungen ausgebildet. In dem Mittelabschnitt 13 sind Durchtrittsöffnungen gebildet. Insbesondere kann der Mittelabschnitt 13 die Form eines Lochblechs mit einer Vielzahl von siebartig angeordneten Durchtrittsöffnungen aufweisen. Die Trennwand 11 kann mit ihren Bestandteilen Seitenabschnitte 12 und Mittelabschnitt 13 einstückig gebildet und durch formgebende und spanende Bearbeitung in die trogartige Form gebracht und mit den Durchtrittsöffnungen versehen sein. Sie kann aber auch aus mehreren Einzelelementen, insbesondere zwei Seitenabschnitten 12 und dem Mittelabschnitt 13, aufgebaut sein, die zu der Trennwand 11 zusammengefügt sind. Dabei kann ein Zusammenfügen der Trennwand 11 mit einer festen Verbindung, zum Beispiel durch Ausbilden einer entlang der Stoßstellen jeweils geführten Schweißnaht, erfolgen. Es können aber auch einzelne Elemente auf die Träger 6 aufgelegt und lediglich mit letzteren verbunden sein, zum Beispiel durch Verschweißen. Wie sich zum Beispiel der Figur 4 entnehmen lässt, ist die Trennwand 11 in einer solchen Weise angeordnet, dass sie den Innenraum der Wanne in einen unterhalb der Trennwand 11 liegenden ersten Abschnitt 14 und einen darüber liegenden, nach oben offenen, zweiten Abschnitt 15 unterteilt. In dem ersten Abschnitt 14 ist dabei einen Wasserauffangtank ausgebildet, der durch die Segmente 10 gebildet ist, verbunden über die torartigen Öffnungen 9. In den Stirnelementen 4 sind in einer einen maximalen Füllstand des in dem ersten Abschnitt 14 gebildeten Wasserauffangtanks bestimmenden Höhe Überlauföffnungen 17 gebildet, die in nach außen von den Stirnelementen 4 auskragenden Ablaufstutzen 18 münden.

Mit Vorteil können in der gezeigten Ausführungsform eines erfindungsgemäßen Dachbegrünungsmoduls 1 diejenigen Elemente, die exponiert zu dem Wasserauffangtank in dem ersten Abschnitt 14 liegen, mit einem Bitumenanstrich vor Korrosion geschützt sein. Dies betrifft insbesondere die Bereiche der Innenseiten von Seitenelementen 3 und Stirnelementen 4 des Rahmens 2, die nach oben weisende Fläche des Bodens 5 und die jeweils in dem Wasserauffangtank verlaufenden Abschnitte der Träger 6.

Der zweite Abschnitt 15 bildet eine trogartige Pflanzwanne aus. In dieser ist bei dem erfindungsgemäßen Dachbegrünungsmodul Pflanzgut eingebracht, kann, in einer Weise, wie sie nachstehend noch näher erläutert werden wird, ein Substrat eingebracht werden und in dem Substrat können für die Dachbegrünung vorgesehene Pflanzen gepflanzt oder gesät werden.

An den vier Ecken des Rahmens 2 des Dachbegrünungsmoduls 1 sind in den Figuren dort angebrachte Anschlagösen 19 gezeigt. Diese Anschlagösen 18 sind dort lösbar angeordnet und können insbesondere dem Festmachen eines Hebezeugs dienen, um das Dachbegrünungsmodul 1 zum Beispiel mit einem Kran oder auch einem Teleskoplader oder einem vergleichbaren Gerät anheben und auf einem zu begründenden Dach an vorbestimmter Stelle absetzen und dort anordnen zu können.

Im Gebrauch wird nun also in dem Dachbegrünungsmodul 1 in dem zweiten Abschnitt 15 ein Substrat eingebracht. Mit Vorteil wird dabei der Mittelabschnitt 13 der Trennwand 11 zunächst mit einem grobkörnigen und insbesondere auch porösen Substrat überdeckt, zum Beispiel mit Blähton oder Lavagranulat. Mit Vorteil kann hierfür auch das unter der Marke Seramis^{®} von der Westland Deutschland GmbH angebotene Substrat verwendet werden. Das grobkörnige Substrat soll dabei den gesamten Bereich des mit Durchtrittsöffnungen versehenen Mittelabschnitts 13 der Trennwand 11 überdecken, vorzugsweise jedoch ohne auch die Seitenabschnitte 12 maßgeblich zu überdecken. Der Rest des zweiten Abschnitts 15, also die zunächst unbedeckten Bereiche der Seitenabschnitte 12 und auch die Schicht des in dem Mittelabschnitt 13 angeordneten grobkörnigen Substrats wird dann mit einem weiteren, feinkörnigen Pflanzsubstrat bedeckt, insbesondere Pflanzerde. In dieses feinkörnige Substrat, insbesondere die Pflanzenerde, wird dann die eigentliche Dachbegrünung, also Grün- oder Blühpflanzen eingebracht, sei dies durch Bepflanzen mit vorgezogenen Setzlingen oder durch Aussaat.

Das erfindungsgemäße Dachbegrünungsmodul 1 ist nun in der Lage nicht nur in der Bepflanzung und dem Substrat Niederschlagswasser zu sammeln und zu binden, sondern sammelt überschüssiges Niederschlagswasser, welches durch die Bepflanzung und das Substrat nicht aufgenommen werden kann, in dem in dem ersten Abschnitt 14 gebildeten Wasserauffangtank. Hierbei läuft Niederschlagswasser, welches das in dem zweiten Abschnitt 15 angeordnete Substrat in vertikaler Richtung durchdrungen hat, entlang der durchgehend gebildeten Seitenabschnitte 12 der Trennwand 11, der Neigung folgend hin zu dem Mittelabschnitt 13 und tritt dort durch die Durchtrittsöffnungen in den ersten Abschnitt 14 und in den dort ausgebildeten Wasserauffangtank. Übertrifft die Menge an in den Wasserauffangtank übertretenden Niederschlagswassers das Fassungsvermögen des Wasserauffangtanks, strömt es über die Überlauföffnungen 16 und die Ablaufstutzen 17 ab. Um zu verhindern, dass dieses überschüssige Niederschlagswasser unkontrolliert zu Boden läuft, kann dieses mit Vorteil aufgefangen und kontrolliert abgeleitet werden. Hierzu kann an dem Dachbegrünungsmodul 1 eine Regenrinne angeordnet sein oder die Ablaufstutzen 17 können direkt an Fallrohre angeschlossen sein, sodass das Abwasser in ein Abwassersystem überführt werden kann. Dabei können auch die Überlauföffnungen 16 und Ablaufstutzen 17 zweier oder mehrerer nebeneinander angeordneter Dachbegrünungsmodule 1 mit einem gemeinsamen Wasserauffangsystem, zum Beispiel einer Dachrinne, verbunden werden.

Durch die besondere Gestaltung und Anordnung des in den zweiten Abschnitt 15 eingebrachten Substrats mit dem grobkörnigen Substrat, welches den mit Durchbruchöffnungen versehenen Mittelabschnitt 13 überdeckt, wird verhindert, dass ablaufendes Niederschlagswasser das feinkörnige Substrat, in dem die Pflanzen wachsen, mitreißt und durch die Durchtrittsöffnungen ausschwemmt. Die Schicht des grobkörnigen Substrats bildet insoweit eine Barriere und hält das feinkörnige Substrat, wie etwa Pflanzerde, zurück.

In dem in dem ersten Abschnitt 14 ausgebildeten Wassertank gesammeltes Wasser steht nun zum einen den in dem zweiten Abschnitt 15 eingebrachten Pflanzen während trockener Perioden zur Verfügung. Hierbei können die in dem zweiten Abschnitt 15 wurzelnden Pflanzen insbesondere mit ihren Wurzeln entlang der geneigt verlaufenden Seitenabschnitte 12 wachsen und durch die Durchtrittsöffnungen im Mittelabschnitt 13 hindurchreichen bis in den Wasserauffangtank. Dort können sich die Wurzeln dann unmittelbar mit Wasser versorgen, dies nach Art einer Hydrokultur. Dadurch, dass der Wasserauffangtank im Übrigen von dem zweiten Abschnitt 15 getrennt ist, ist verhindert, dass dort die Pflanzenwurzeln übernässen und die für die Dachbegrünung eingesetzten Pflanzen krank werden und Schaden nehmen.

Die erfindungsgemäße Ausgestaltung mit dem nach oben hin in den Seitenabschnitten 12 der Trennwand 11 geschlossen überdeckten Wasserauffangtank bringt noch einen weiteren Effekt: In Zeiten starker Sonneneinstrahlung bzw. warmer Temperaturen kann in dem Wasserauffangtank befindliches Wasser verdunsten und sorgt so nach unten hin zum Boden 5 für eine kühlende Wirkung aufgrund der Verdunstungskälte. Der im ersten Abschnitt 14 dann gebildeter und aufsteigender Wasserdampf kondensiert an der Unterseite der Trennwand 11, die durch das aufliegende Substrat kühler bleibt, kondensiert dort insbesondere im Bereich der Seitenabschnitte 12. Das dort gebildete Kondensat tropft in den Wasserauffangtank zurück, bzw. rinnt an der Unterseite der Seitenabschnitte 12 entlang der Neigung herab sind bis zum Mittelabschnitt 13 und dort befeuchtet entweder die Durchtrittsöffnungen und dort befindliche Wurzeln oder aber tropft zurück in den Wasserauffangtank. Auf diese Weise wird insbesondere an heißen Frühjahrs- und Sommertagen eine zusätzliche isolierende bzw. kühlende Wirkung in Richtung der Umgebung erhalten, wird insbesondere ein unterhalb des Dachbegrünungsmoduls 1, bzw. unterhalb des mit diesem versehenen Daches gelegener Raum zusätzlich gekühlt und dies auf eine Weise ohne erforderlichen externen Energieaufwand.

Das Einbringen des Substrats und der Pflanzen kann bei dem Dachbegrünungsmodul 1 vor dem Aufbringen des Dachbegrünungsmoduls 1 auf ein Dach erfolgen; das Dachbegrünungsmodul 1 kann dann zusammen mit Substrat und gegebenenfalls auch Bepflanzung auf ein Dach verbracht werden. Ebenso gut ist es aber auch möglich, zunächst einmal das leere Dachbegrünungsmodul 1 auf einem Dach anzuordnen und auszurichten und dann an dieser Errichtungsstelle mit dem Substrat zu befüllen und zu bepflanzen. Insoweit kann das Dachbegrünungsmodul 1 auch in zwei Weisen aufgefasst werden. In einem engeren Sinne, in dem dies lediglich die in den Figuren dargestellte bauliche Einrichtung umfasst, und in einem weiteren Sinne mit Substrat und gegebenenfalls Aussaat bzw. Bepflanzung.

Das erfindungsgemäße Dachbegrünungsmodul 1 kann, da es in einem geschlossenen Kasten bzw. einer Wanne gebildet ist, als Ganzes, also insbesondere mit darin vorgesehener Begrünung und Bepflanzung, auch von einem Aufstellungsort auf einem Dach wieder abgehoben werden. Dies kann erfolgen, ohne dass die Bepflanzung Schaden nimmt, und in einer Weise, dass das Dachbegrünungsmodul 1 anschließend mit der bestehenden Bepflanzung wiederverwendet werden kann, indem es zum Beispiel auf ein anderes Dach gesetzt oder aber auf dem Platz, von dem es zuvor zum Beispiel für eine Wartung des Daches, entnommen worden ist, wieder aufgestellt wird.

Ein weiterer Vorteil der kastenartigen Bauweise besteht darin, dass mehrere Dachbegrünungsmodule 1, insbesondere solche mit gleichen Abmessungen, in der Logistik, also für eine Lagerung und auch für einen Transport, übereinandergestapelt und so platzsparend aufbewahrt oder verbracht werden können.

### Bezugszeichenliste

- 1: Dachbegrünungsmodul
- 2: Rahmen
- 3: Seitenelement
- 4: Stirnelement
- 5: Boden
- 6: Träger
- 7: Abschnitt
- 8: Abschnitt
- 9: Öffnung
- 10: Segment
- 11: Trennwand
- 12: Seitenabschnitt
- 13: Mittelabschnitt
- 14: erster Abschnitt
- 15: zweiter Abschnitt
- 16: Überlauföffnung
- 17: Ablaufstutzen
- 18: Anschlagöse

## Patentansprüche

1. Dachbegrünungsmodul (1) mit einer in einem tragenden Rahmen (2) gebildeten, durch Seitenwände (3, 4) und einen Boden (5) begrenzten Wanne, wobei die Wanne durch eine Trennwand (11) in einen bodennahen, unteren Abschnitt (14), der einen Wasserauffangtank ausbildet, und einen oberen Abschnitt (15) zur Aufnahme von Pflanzgut unterteilt ist, wobei die Trennwand (11) drei Wandabschnitte (12, 13) aufweist, jeweils einen in einem Querschnitt an jeweils einer von zwei einander gegenüberliegenden Seitenwände (3) angrenzenden, undurchbrochenen Seitenabschnitt (12) und einen eine Vielzahl von Durchtrittsöffnungen aufweisenden Mittelabschnitt (13), wobei die Seitenabschnitte (12) ausgehend von den beiden einander gegenüberliegenden Seitenwänden (3) und hin zu dem Mittelabschnitt (13) in Richtung des Bodens (5) geneigt verlaufen, **dadurch gekennzeichnet, dass** in dem oberen Abschnitt (15) auf der Trennwand (11) Pflanzgut aufgebracht ist.

2. Dachbegründungsmodul (1) nach Anspruch 1, **dadurch gekennzeichnet, dass** der Mittelabschnitt (13) als Lochblech ausgeführt ist.

3. Dachbegrünungsmodul (1) nach einem der vorhergehenden Ansprüche, **dadurch gekennzeichnet, dass** der Mittelabschnitt (13) parallel zu dem Boden (5) verläuft.

4. Dachbegrünungsmodul (1) nach einem der vorhergehenden Ansprüche, **dadurch gekennzeichnet, dass** die Seitenabschnitte (12) und der Mittelabschnitt (13) der Trennwand (11) aus einem Metallblech, insbesondere einem verzinkten Stahlblech, gebildet sind.

5. Dachbegrünungsmodul (1) nach einem der vorhergehenden Ansprüche, **dadurch gekennzeichnet, dass** der Boden (5) und die den Wasserauffangtank in dem unteren Abschnitt (14) begrenzenden Seitenwände aus einem mit einem Korrosionsschutz belegten Metallblech, insbesondere einem mit einem Bitumenanstrich versehenen Stahlblech, gebildet sind.

6. Dachbegrünungsmodul (1) nach einem der vorhergehenden Ansprüche, **dadurch gekennzeichnet, dass** die Seitenabschnitte (12) gegenüber dem Boden (5) unter einem Neigungswinkel von 0,5° bis 10°, insbesondere von 0,5° bis 5°, vorzugsweise von 0,7° bis 1,5° verlaufen.

7. Dachbegrünungsmodul (1) nach einem der vorhergehenden Ansprüche, **dadurch gekennzeichnet, dass** das Verhältnis der Abmessung der Breite des Bodens (5) zu der Breite des Mittelabschnitts (13), genommen in dem Querschnitt, zwischen 15:1 und 35:1 beträgt, vorzugsweise zwischen 20:1 und 30:1, insbesondere 25:1.

8. Dachbegrünungsmodul (1) nach einem der vorhergehenden Ansprüche, **gekennzeichnet durch** wenigstens einen von dem Wasserauffangtank nach außerhalb des Dachbegrünungsmoduls führenden Überlauf (16, 17) zum Ableiten von Wasser aus dem Wasserauffangtank, wenn dieser einen maximalen Füllstand erreicht hat.

9. Dachbegrünungsmodul (1) nach einem der vorhergehenden Ansprüche, **dadurch gekennzeichnet, dass** es eine rechteckige Grundform aufweist und dass die Seitenabschnitte (12) der Trennwand (11) ausgehend von Längskanten des Rechtecks in Richtung einer Längsmittelachse des Dachbegrünungsmoduls (1) geneigt verlaufen.

10. Dachbegrünungsmodul (1) nach Anspruch 9, **dadurch gekennzeichnet, dass** die Trennwand (11) zu einer lotrecht zu dem Boden (5) verlaufenden Längsmittelebene symmetrisch gebildet ist.

11. Dachbegrünungsmodul (1) nach einem der Ansprüche 9 oder 10, **gekennzeichnet durch** in Querrichtung zwischen den Seitenwänden (3) verlaufende und zueinander beabstandete, insbesondere auf dem Boden (5) angeordnete, Träger (6), auf denen die Trennwand (11) aufliegt, mit denen die Trennwand (11) insbesondere fest verbunden ist.

12. Dachbegrünungsmodul (1) nach Anspruch 11, **gekennzeichnet durch** in den Trägern (6), insbesondere in einem mittleren Abschnitt (8), belassene torartige Öffnungen (9), die jeweils zwischen den Trägern (6) gebildete Segmente (10) des Wasserauffangtanks miteinander verbinden.

13. Dachbegrünungsmodul (1) nach einem der vorhergehenden Ansprüche, **gekennzeichnet durch** insbesondere lösbar festgelegte Anschlagösen (18) zum Anschlagen eines Hubgeschirrs.

14. Dachbegrünungsmodul (1) nach einem der vorhergehenden Ansprüche, **dadurch gekennzeichnet, dass** in dem oberen Abschnitt (14) in einem den Mittelabschnitt (13) der Trennwand (11) überdeckenden Bereich eine Schicht aus einem grobkörnigen, porösen Substrat, wie insbesondere Blähton oder Lavagranulat, angeordnet ist und in dem oberen Abschnitt (14) weiterhin Pflanzerde angeordnet ist, die auch die Schicht aus dem grobkörnigen, porösen Substrat überdeckt.

15. Dachbegrünungsmodul (1) nach Anspruch 14, **gekennzeichnet durch** in der Pflanzerde eingebrachte Grün- und/oder Blühpflanzen.

## Claims

1. A green-roof module (1) comprising a trough formed in a supporting frame (2) and bounded by side walls (3, 4) and a bottom (5), wherein the trough is divided by a partition (11) into a lower section (14) near the base, which forms a water collection tank, and an upper section (15) for receiving plants, wherein the partition (11) has three wall sections (12, 13), in each case an adjoining, in cross-section, unbroken side section (12), in each case one of two mutually opposite side walls (3), and a centre section (13) having a plurality of through-openings, wherein the side sections (12) extend from the two opposite side walls (3) to the centre section (13) and are inclined in the direction of the base (5), **characterised in that** planting material is placed on the partition (11) in the upper section (15).

2. A green-roof module (1) according to claim 1, **characterised in that** the central section (13) is designed as a perforated plate.

3. A green-roof module (1) according to one of the preceding claims, **characterised in that** the central section (13) runs parallel to the ground (5).

4. A green-roof module (1) according to one of the preceding claims, **characterised in that** the side sections (12) and the central section (13) of the partition wall (11) are formed from a metal sheet, in particular a galvanised steel sheet.

5. A green-roof module (1) according to one of the preceding claims, **characterised in that** the base (5) and the side walls delimiting the water collection tank in the lower section (14) are formed from a metal sheet coated with a corrosion protection, in particular a steel sheet provided with a bitumen coating.

6. A green-roof module (1) according to one of the preceding claims, **characterised in that** the side sections (12) extend at an angle of inclination of 0.5° to 10°, in particular of 0.5° to 5°, preferably of 0.7° to 1.5°, relative to the ground (5).

7. A green-roof module (1) according to one of the preceding claims, **characterised in that** the ratio of the dimension of the width of the base (5) to the width of the central section (13), taken in the cross-section, is between 15:1 and 35:1, preferably between 20:1 and 30:1, in particular 25:1.

8. A green-roof module (1) according to one of the preceding claims, **characterised by** at least one overflow (16, 17) leading from the water collection tank to outside the roof greening module for draining water from the water collection tank when the latter has reached a maximum filling level.

9. A green-roof module (1) according to one of the preceding claims, **characterised in that** it has a rectangular basic shape and **in that** the side sections (12) of the partition wall (11), starting from longitudinal edges of the rectangle, run inclined in the direction of a longitudinal central axis of the roof greening module (1).

10. A roof greening module (1) according to claim 9, **characterised in that** the partition wall (11) is formed symmetrically to a longitudinal central plane running perpendicular to the ground (5).

11. A green-roof module (1) according to one of claims 9 or 10, **characterised by** supports (6) extending in the transverse direction between the side walls (3) and spaced apart from one another, in particular arranged on the ground (5), on which the partition wall (11) rests, to which the partition wall (11) is in particular firmly connected.

12. A green-roof module (1) according to claim 11, **characterised by** gate-like openings (9) left in the supports (6), in particular in a central section (8), which connect segments (10) of the water collection tank formed between the supports (6) to each other.

13. A green-roof module (1) according to one of the preceding claims, **characterised in** particular by detachably fixed attachment eyes (18) for attaching a lifting harness.

14. A green-roof module (1) according to one of the preceding claims, **characterised in that** a layer of a coarse-grained, porous substrate, such as in particular expanded clay or lava granulate, is arranged in the upper section (14) in an area covering the central section (13) of the partition wall (11), and planting soil is also arranged in the upper section (14), which also covers the layer of the coarse-grained, porous substrate.

15. A green-roof module (1) according to claim 14, **characterised by** green and/or flowering plants introduced into the planting soil.

## Revendications

1. Module de végétalisation de toiture (1) comportant une cuvette formée dans un cadre de support (2) et délimitée par des parois latérales (3, 4) et une base (5), la cuvette étant divisée par une paroi de séparation (11) en une section inférieure (14) proche de la base, qui forme un réservoir de collecte d'eau, et une section supérieure (15) destinée à recevoir le matériel de plantation, la paroi de séparation (11) ayant trois sections de paroi (12, 13), chacune ayant une section transversale à l'une des deux parois latérales opposées (3, 4) et une section supérieure (15) destinée à recevoir le matériel de plantation, dans laquelle la paroi de séparation (11) a trois sections de paroi (12, 13), dans chaque cas une section latérale (12) qui en section transversale jouxte dans chaque cas l'une des deux parois latérales opposées (3), la section latérale (12) et une section centrale (13) ayant une pluralité d'ouvertures de passage, dans laquelle les sections latérales (12) s'étendent à partir des deux parois latérales opposées (3) et s'inclinent vers la section centrale (13) en direction du sol (5), **caractérisée en ce que** le matériel de plantation est placé sur la paroi de séparation (11) dans la section supérieure (15).

2. Module de fondation de toit (1) selon la revendication 1, **caractérisé par le fait que** la section centrale (13) est conçue comme une plaque perforée.

3. Module de végétalisation de toiture (1) selon l'une des revendications précédentes, **caractérisé en ce que** la section centrale (13) est parallèle au sol (5).

4. Module de végétalisation de toiture (1) selon l'une des revendications précédentes, **caractérisé en ce que** les sections latérales (12) et la section centrale (13) de la paroi de séparation (11) sont formées d'une tôle métallique, en particulier d'une tôle d'acier galvanisé.

5. Module de végétalisation de toiture (1) selon l'une des revendications précédentes, **caractérisé en ce que** la base (5) et les parois latérales délimitant le réservoir de collecte d'eau dans la partie inférieure (14) sont formées d'une tôle métallique revêtue d'une protection anticorrosion, notamment d'une tôle d'acier munie d'une couche de bitume.

6. Module de végétalisation de toiture (1) selon l'une des revendications précédentes, **caractérisé en ce que** les parties latérales (12) s'étendent à un angle d'inclinaison de 0,5° à 10°, en particulier de 0,5° à 5°, de préférence de 0,7° à 1,5°, par rapport au sol (5).

7. Module de végétalisation de toiture (1) selon l'une des revendications précédentes, **caractérisé en ce que** le rapport de la dimension de la largeur de la base (5) à la largeur de la section centrale (13), prises en coupe transversale, est compris entre 15:1 et 35:1, de préférence entre 20:1 et 30:1, en particulier 25:1.

8. Module de végétalisation de toiture (1) selon l'une des revendications précédentes, **caractérisé par** au moins un trop-plein (16, 17) partant du réservoir de collecte d'eau vers l'extérieur du module de végétalisation de toiture pour évacuer l'eau du réservoir de collecte d'eau lorsque celui-ci a atteint un niveau de remplissage maximal.

9. Module de végétalisation de toiture (1) selon l'une des revendications précédentes, **caractérisé en ce qu'**il a une forme de base rectangulaire et **en ce que** les sections latérales (12) de la paroi de séparation (11), à partir des bords longitudinaux du rectangle, sont inclinées en direction d'un axe central longitudinal du module de végétalisation de toiture (1).

10. Module de végétalisation de toiture (1) selon la revendication 9, **caractérisé en ce que** la paroi de séparation (11) est formée symétriquement par rapport à un plan central longitudinal perpendiculaire au sol (5).

11. Module de végétalisation de toiture (1) selon l'une des revendications 9 ou 10, **caractérisé par** des supports (6) s'étendant dans le sens transversal entre les parois latérales (3) et espacés les uns des autres, notamment disposés sur le sol (5), sur lequel repose la paroi de séparation (11), à laquelle la paroi de séparation (11) est notamment solidement reliée.

12. Module de végétalisation de toiture (1) selon la revendication 11, **caractérisé par** des ouvertures (9) en forme de porte laissées dans les supports (6), en particulier dans une section centrale (8), qui relient les segments (10) du réservoir de collecte d'eau formé entre les supports (6) les uns aux autres.

13. Module de végétalisation de toiture (1) selon l'une des revendications précédentes, caractérisé notamment par des anneaux d'attache (18) fixés de manière amovible pour attacher un harnais de levage.

14. Module de végétalisation de toiture (1) selon l'une des revendications précédentes, **caractérisé en ce qu'**une couche de substrat poreux à gros grains, tel que notamment de l'argile expansée ou du granulat de lave, est disposée dans la partie supérieure (14) dans une zone recouvrant la partie centrale (13) de la paroi de séparation (11), et qu'un sol de plantation est également disposé dans la partie supérieure (14), qui recouvre également la couche de substrat poreux à gros grains.

15. Module de végétalisation de toiture (1) selon la revendication 14, **caractérisé par** des plantes vertes et/ou à fleurs introduites dans le sol de plantation.
